# EUROPEAN PATENT APPLICATION

(11) **EP 4 770 246 A1**
(43) Date of publication of application: **01.07.2026**
(21) Application number: 24876206.4
(22) Date of filing: 07.08.2024
(51) Int. Cl.: H04W 72/232

(54) **DATA TRANSMISSION METHOD AND COMMUNICATION APPARATUS**

(30) Priority: 10.10.2023 CN 202311309490
(71) Applicant: HUAWEI TECHNOLOGIES CO., LTD., Shenzhen, Guangdong 518129 (CN)
(72) Inventor: XU, Rui, Shenzhen, Guangdong 518129 (CN); QIN, Yi, Shenzhen, Guangdong 518129 (CN); CAO, Youlong, Shenzhen, Guangdong 518129 (CN); PANG, Xu, Shenzhen, Guangdong 518129 (CN)
(74) Representative: Maiwald GmbH
(86) International application number: PCT/CN2024/110320
(87) International publication number: WO 2025/077386

(57) **Abstract**

This application provides a data transmission method and a communication apparatus, and relates to the field of communication technologies. In the method, a terminal device receives first information that indicates a switch in scheduling configurations. Based on this information, it activates a first scheduling configuration and deactivates a second one, with the two configurations being different. This allows the scheduling configuration switch to be carried out with low signaling overhead.

## Description

This application claims priority to Chinese Patent Application No. 202311309490.9, filed with the China National Intellectual Property Administration on October 10, 2023 and entitled "DATA TRANSMISSION METHOD AND COMMUNICATION APPARATUS", which is incorporated herein by reference in its entirety.

### TECHNICAL FIELD

This application relates to the field of communication technologies, and more specifically, to a data transmission method and a communication apparatus.

### BACKGROUND

Extended reality (extended reality, XR) refers to all real-and-virtual integrated environments and human-machine interactions enabled by computer technologies and wearable devices, and includes the following fields: virtual reality (virtual reality, AR), mixed reality (mixed reality, MR), augmented reality (augmented reality, VR), and the like.

An XR service may be transmitted between an access network device and a terminal device. Given the dynamic nature of XR service characteristics, such as varying frame rates and resolutions, the access network device may tailor scheduling configurations accordingly to optimize service transmission. In other words, the access network device may schedule resources based on different scheduling configurations, thereby improving XR transmission with the terminal device. Nevertheless, a key technical challenge remains: how to implement a switch between these different scheduling configurations while minimizing signaling overhead.

### SUMMARY

This application provides a data transmission method and a communication apparatus, to complete a switch in scheduling configurations with low signaling overhead.

According to a first aspect, a data transmission method is provided, including: receiving first information, where the first information indicates a switch in scheduling configurations; and activating a first scheduling configuration and deactivating a second scheduling configuration based on the first information.

The solution according to the first aspect may be performed by a terminal device, or may be performed by a module (for example, a chip system) of the terminal device, or may be performed by a logical node, a logical module, or software that can implement all or part of functions of the terminal device. This is not limited. For ease of description, the following uses the terminal device as an example for description.

Specifically, by using the first information, the terminal device may complete a switch from the second scheduling configuration to the first scheduling configuration, or complete activation of the first scheduling configuration and deactivation of the second scheduling configuration. In this way, the terminal device can complete a switch in the scheduling configurations with low signaling overhead.

In a possible implementation, the first scheduling configuration is a first configured grant (configured grant, CG) configuration, and the second scheduling configuration is a second CG configuration.

This enables the terminal device to complete a switch in CG configurations with low signaling overhead.

In a possible implementation, the method further includes: sending second information, where the second information is used to request a switch in the CG configurations.

This enables the terminal device and an access network device to complete signaling exchange on whether to switch the scheduling configurations.

In a possible implementation, both the first scheduling configuration and the second scheduling configuration are semi-persistent scheduling (semi-persistent scheduling, SPS) configurations.

For example, the first scheduling configuration is a first SPS configuration, and the second scheduling configuration is a second SPS configuration.

This enables the terminal device to complete a switch in SPS configurations with low signaling overhead.

In a possible implementation, the first scheduling configuration and the second scheduling configuration belong to a scheduling configuration set.

This enables the terminal device to complete a switch between different scheduling configurations in the scheduling configuration set.

In a possible implementation, the method further includes: receiving third information, where the third information is used to configure the scheduling configuration set.

This enables the terminal device to complete a switch between different scheduling configurations in the scheduling configuration set.

In a possible implementation, the first scheduling configuration includes one or more scheduling configurations, and/or the second scheduling configuration includes one or more scheduling configurations.

This enables the terminal device to complete a switch from one scheduling configuration to another scheduling configuration, from one scheduling configuration to a plurality of scheduling configurations, or from a plurality of scheduling configurations to another scheduling configuration, allowing for greater flexibility in adapting to various changes in service characteristics.

According to a second aspect, a data transmission method is provided, including: sending first information, where the first information indicates a switch in scheduling configurations; and performing data transmission based on a first scheduling configuration after a switch.

The technical solution according to the second aspect may be performed by an access network device, or may be performed by a module (for example, a chip system) of the access network device, or may be performed by a logical node, a logical module, or software that can implement all or part of functions of the access network device. This is not limited. For ease of description, the following uses the access network device as an example for description.

Specifically, the access network device may indicate, by using the first information, a terminal device to switch scheduling configurations. Unlike existing methods that rely on two separate messages to coordinate the switch, this solution effectively reduces signaling overhead associated with switching scheduling configurations.

In a possible implementation, the first scheduling configuration is a first CG configuration.

In a possible implementation, the method further includes: receiving second information, where the second information is used to request a switch in CG configurations.

In a possible implementation, the first scheduling configuration is a first SPS configuration.

In a possible implementation, the first scheduling configuration belongs to a scheduling configuration set.

In a possible implementation, the method further includes: sending third information, where the third information is used to configure the scheduling configuration set.

In a possible implementation, the first scheduling configuration includes one or more scheduling configurations.

According to a third aspect, a communication apparatus is provided, including: an interface unit, configured to receive first information, where the first information indicates a switch in scheduling configurations; and a processing unit, configured to activate a first scheduling configuration and deactivate a second scheduling configuration based on the first information.

The communication apparatus according to the third aspect may be a terminal device, or may be a module (for example, a chip system) of the terminal device, or may be a logical node, a logical module, or software that can implement all or part of functions of the terminal device. This is not limited.

In a possible implementation, the first scheduling configuration is a first CG configuration, and the second scheduling configuration is a second CG configuration.

In a possible implementation, the interface unit is further configured to send second information, where the second information is used to request a switch in CG configurations.

In a possible implementation, both the first scheduling configuration and the second scheduling configuration are SPS configurations.

In a possible implementation, the first scheduling configuration and the second scheduling configuration belong to a scheduling configuration set.

In a possible implementation, the transceiver unit is further configured to receive third information, where the third information is used to configure the scheduling configuration set.

In a possible implementation, the first scheduling configuration includes one or more scheduling configurations, and/or the second scheduling configuration includes one or more scheduling configurations.

According to a fourth aspect, a communication apparatus is provided, including: an interface unit, configured to send first information, where the first information indicates a switch in scheduling configurations; and a processing unit, configured to perform data transmission based on a first scheduling configuration after a switch.

The communication apparatus according to the fourth aspect may be an access network device, or may be a module (for example, a chip system) of the access network device, or may be a logical node, a logical module, or software that can implement all or part of functions of the access network device. This is not limited.

In a possible implementation, the first scheduling configuration is a first CG configuration.

In a possible implementation, the interface unit is further configured to receive second information, where the second information is used to request a switch in CG configurations.

In a possible implementation, the first scheduling configuration is a first SPS configuration.

In a possible implementation, the first scheduling configuration belongs to a scheduling configuration set.

In a possible implementation, the interface unit is further configured to send third information, where the third information is used to configure the scheduling configuration set.

In a possible implementation, the first scheduling configuration includes one or more scheduling configurations.

According to a fifth aspect, a communication apparatus is provided. The communication apparatus may be a terminal device, or may be a device, a module, or the like configured to perform a function of the terminal device.

In a possible implementation, the communication apparatus may include modules or units that one-to-one correspond to the method/operations/steps/actions described in the first aspect. The module or unit may be implemented by a hardware circuit, or may be implemented by software, or may be implemented by a combination of the hardware circuit and the software.

According to a sixth aspect, a communication apparatus is provided. The communication apparatus may be an access network device, or may be a device, a module, or the like configured to perform a function of the access network device.

In a possible implementation, the communication apparatus may include modules or units that one-to-one correspond to the method/operations/steps/actions described in the second aspect. The module or unit may be implemented by a hardware circuit, or may be implemented by software, or may be implemented by a combination of the hardware circuit and the software.

According to a seventh aspect, a communication apparatus is provided, including a processor. The processor is configured to enable, by executing a computer program or instructions or through a logic circuit, the communication apparatus to perform the method according to any one of the first aspect and the possible implementations of the first aspect, or the communication apparatus to perform the method according to any one of the second aspect and the possible implementations of the second aspect.

In a possible implementation, the communication apparatus further includes a memory. The memory is configured to store the computer program or the instructions.

In a possible implementation, the communication apparatus further includes a communication interface. The communication interface is configured to input a signal and/or output a signal.

According to an eighth aspect, a communication apparatus is provided, including a logic circuit and an input/output interface. The input/output interface is configured to input a signal and/or output a signal. The logic circuit is configured to perform the method according to any one of the first aspect and the possible implementations of the first aspect, or the logic circuit is configured to perform the method according to any one of the second aspect and the possible implementations of the second aspect.

According to a ninth aspect, a computer-readable storage medium is provided. The computer-readable storage medium stores a computer program or instructions. When the computer program or the instructions are run on a computer, the method according to any one of the first aspect and the possible implementations of the first aspect is performed, or the method according to any one of the second aspect and the possible implementations of the second aspect is performed.

According to a tenth aspect, a computer program product is provided, including instructions. When the instructions are run on a computer, the method according to any one of the first aspect and the possible implementations of the first aspect is performed, or the method according to any one of the second aspect and the possible implementations of the second aspect is performed.

According to an eleventh aspect, this application provides a communication system, including a terminal device and an access network device. The terminal device is configured to perform the method according to any one of the first aspect and the possible implementations of the first aspect. The access network device is configured to perform the method according to any one of the second aspect and the possible implementations of the second aspect.

According to a twelfth aspect, this application provides a chip system, including a processor. The processor is configured to execute a computer program or instructions in a memory, to enable the chip system to implement the method according to any one of the first aspect, the second aspect, and the possible implementations of the first aspect and the second aspect.

For descriptions of beneficial effect of any one of the second aspect to the twelfth aspect, refer to the descriptions of the beneficial effect of the first aspect.

### BRIEF DESCRIPTION OF DRAWINGS

FIG. 1 is a diagram of a communication system to which an embodiment of this application is applicable;
FIG. 2 is a diagram of a network architecture to which an embodiment of this application is applicable;
FIG. 3 is a diagram of another network architecture to which an embodiment of this application is applicable;
FIG. 4A and FIG. 4B are diagrams of a protocol stack according to an embodiment of this application;
FIG. 5A and FIG. 5B are diagrams of a CG according to an embodiment of this application;
FIG. 6 is a schematic interaction flowchart of a data transmission method according to an embodiment of this application;
FIG. 7 is a diagram of a switch in CG configurations according to an embodiment of this application;
FIG. 8 is a block diagram of a communication apparatus according to an embodiment of this application; and
FIG. 9 is a block diagram of another communication apparatus according to an embodiment of this application.

### DESCRIPTION OF EMBODIMENTS

In descriptions of embodiments of this application, "/" means "or" unless otherwise specified. For example, A/B may indicate A or B. In this specification, "and/or" describes only an association relationship between associated objects and indicates that three relationships may exist. For example, A and/or B may indicate the following three cases: Only A exists, both A and B exist, and only B exists. In addition, in the descriptions of embodiments of this application, "a plurality of" means two or more.

In the following descriptions, the terms "first" and "second" are intended merely for a purpose of description, and shall not be interpreted as indicating or implying relative importance or implying a quantity of indicated technical features. Therefore, a feature limited by "first" or "second" may explicitly or implicitly include one or more features. In the descriptions of embodiments, unless otherwise specified, "a plurality of" means two or more.

In addition, the terms "include" and "have" and any variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

In embodiments of this application, a term like "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In this application, "at least one" means one or more. "A plurality of" means two or more. "At least two" means two, three, or more. "And/or" is used to describe an association relationship between associated objects, and indicates that three relationships may exist. For example, "A and/or B" may indicate three cases: Only A exists, only B exists, and both A and B exist, where A and B may be singular or plural. The character "/" generally indicates an "or" relationship between associated objects. "At least one of the following items (pieces)" or a similar expression thereof means any combination of these items, including a single item (piece) or any combination of a plurality of items (pieces). For example, at least one of a, b, and (or) c may indicate a, b, c, "a and b", "a and c", "b and c", or "a, b, and c", where a, b, and c may be singular or plural. Both "when ..." and "if" mean that corresponding processing is performed in an objective case, are not intended to limit time, do not require a determining action during implementation, and do not mean that there is another limitation.

In this application, "sending information to ... (a terminal)" may be understood as that a destination end of the information is the terminal device, and may include directly or indirectly sending the information to the terminal device; and "receiving information from ... (a terminal)" may be understood as that a source end of the information is a terminal device, and may include directly or indirectly receiving the information from the terminal device. Information may undergo necessary processing, for example, a format change, between the source end for sending the information and the destination end. However, the destination end may understand valid information from the source end. A similar expression in this application may be understood similarly. Details are not described herein again.

Technical solutions in embodiments of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or a new radio (new radio, NR) system, a 5.5G system, a 6th generation (6th generation, 6G) system, or a future communication.

A terminal device in embodiments of this application is a device having a wireless transceiver function, may be a fixed device, or may be a mobile device, and may be user equipment, an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (Session Initiation Protocol, SIP) phone, a wireless local loop (Wireless Local Loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network or a terminal device in a future evolved public land mobile network (public land mobile network, PLMN), or the like. The terminal device may alternatively be a handheld device (for example, a mobile phone), a wearable device, a vehicle-mounted device, or a wireless apparatus (for example, a communication module, a modem, or a chip system) built in the foregoing device. The terminal device is configured to connect to a person, an object, a machine, and the like, and may be widely used in various scenarios, for example, includes but is not limited to terminal devices in the following scenarios: cellular communication, device-to-device (device-to-device, D2D) communication, vehicle to everything (vehicle to everything, V2X), machine-to-machine/machine-type communication (machine-to-machine/machine-type communication, M2M/MTC), an internet of things (internet of things, IoT), virtual reality (virtual reality, VR), augmented reality (augmented reality, AR), industrial control (industrial control), self driving (self driving), telemedicine (remote medical), a smart grid (smart grid), smart furniture, a smart office, a smart wearable, smart transportation, a smart city (smart city), an uncrewed aerial vehicle, and a robot. This is not limited in embodiments of this application.

A network device in embodiments of this application may be a device configured to communicate with the terminal device. The network device may be a base transceiver station (base transceiver station, BTS) in a GSM system or a CDMA system, may be a NodeB (NodeB, NB) in a WCDMA system, may be an evolved NodeB (evolved NodeB, eNB or eNodeB) in an LTE system, or may be a radio controller in a cloud radio access network (cloud radio access network, CRAN) scenario. Alternatively, the network device may be a relay station, an access point, a vehicle-mounted device, a wearable device, a network device in a 5G network, a network device in a future evolved PLMN network, or the like. For example, the network device may include an access network device and/or a core network device. The access network device is a device having the wireless transceiver function, and is configured to communicate with the terminal device.

The access network device includes but is not limited to a base station (BTS, NodeB, eNodeB/eNB, or gNodeB/gNB) in the foregoing communication system, a transmission reception point (transmission reception point, TRP), a base station evolved from the 3rd generation partnership project (3rd generation partnership project, 3GPP), an access node in a wireless fidelity (wireless fidelity, Wi-Fi) system, a wireless relay node, a wireless backhaul node, and the like. The base station may be a macro base station, a micro base station, a picocell base station, a small cell, a relay station, or the like. A plurality of base stations may support networks using a same access technology mentioned above, or may support networks using different access technologies mentioned above. The base station may include one or more co-site or non-co-site transmission reception points. The network device may alternatively be a radio controller, a central unit (central unit, CU), and/or a distributed unit (distributed unit, DU) in the CRAN scenario. The network device may alternatively be a server, a wearable device, a vehicle-mounted device, or the like. For example, a network device in a V2X technology may be a road side unit (road side unit, RSU). This is not limited in this application.

In embodiments of this application, the terminal device or the network device includes a hardware layer, an operating system layer running at the hardware layer, and an application layer running at the operating system layer. The hardware layer includes hardware such as a central processing unit (central processing unit, CPU), a memory management unit (memory management unit, MMU), and a memory (also referred to as a main memory). An operating system may be any one or more computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application provided that a program that records code of the method provided in embodiments of this application can be run to perform communication according to the method provided in embodiments of this application. For example, the execution body of the method provided in embodiments of this application may be the terminal device or the network device, or a functional module, a chip, or a circuit that can invoke and execute the program in the terminal device or the network device.

The following further describes the technical solutions in this application in detail with reference to accompanying drawings of this specification.

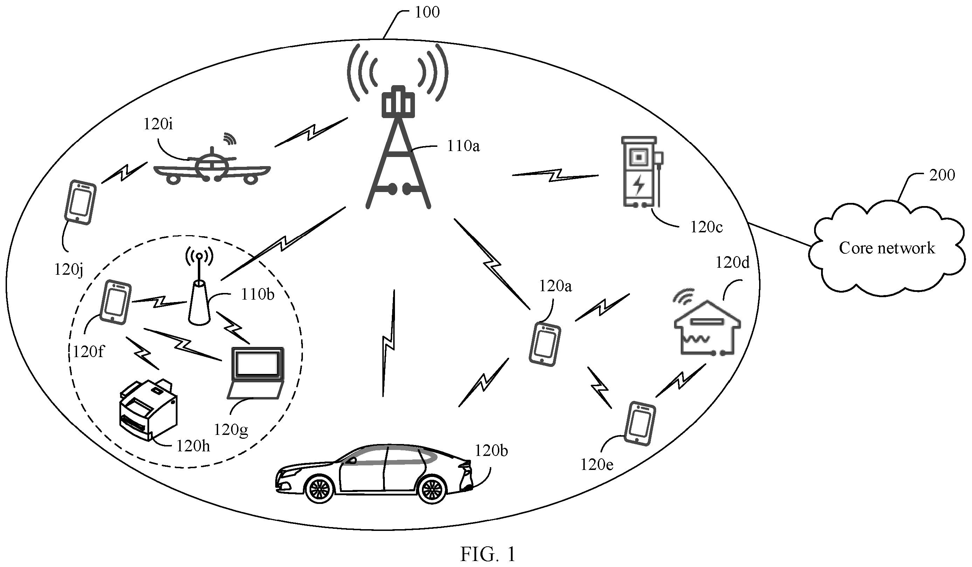

FIG. 1 is a diagram of a communication system to which an embodiment of this application is applicable. As shown in FIG. 1, the communication system includes a radio access network (radio access network, RAN) 100 and a core network (core network, CN) 200. The RAN 100 includes at least one RAN node (for example, 110a and 110b, which are collectively referred to as 110) and at least one terminal device (for example, 120a to 120j, which are collectively referred to as 120). The RAN 100 may further include another RAN node, for example, a wireless relay device and/or a wireless backhaul device (not shown in FIG. 1). The terminal device 120 is connected to the RAN node 110 in a wireless manner. The RAN node 110 is connected to the core network 200 in a wireless or wired manner. A core network device in the core network 200 and the RAN node 110 in the RAN 100 may be respectively different physical devices, or may be a same physical device that integrates a core network logical function and a radio access network logical function.

The RAN 100 may be a 3GPP-related cellular system, for example, a 4G or 5G mobile communication system, or a future-oriented evolved system (for example, a 6G mobile communication system). The RAN 100 may alternatively be an open access network (open RAN, O-RAN, or ORAN), a CRAN, or a Wi-Fi system. The RAN 100 may alternatively be a communication system that integrates two or more of the foregoing systems.

The RAN node 110 may also be sometimes referred to as an access network device, a RAN entity, an access node, or the like, and forms part of the communication system, to help the terminal device implement radio access. A plurality of RAN nodes 110 in the communication system may be nodes of a same type, or may be nodes of different types. In some scenarios, roles of the RAN node 110 and the terminal device 120 are relative. For example, a network element 120i may be a helicopter or an uncrewed aerial vehicle, and may be configured as a mobile base station. For a terminal device 120j that accesses the RAN 100 through the network element 120i, the network element 120i is a base station. However, for a base station 110a, the network element 120i is a terminal device. Both the RAN node 110 and the terminal 120 are sometimes referred to as communication apparatuses. For example, the network elements 110a and 110b may be understood as communication apparatuses having a base station function, and the network elements 120a to 120j may be understood as communication apparatuses having a terminal function.

In a possible scenario, the RAN node may be a BS, an eNodeB, an access point (access point, AP), a TRP, a gNB, a next generation base station in a 6G mobile communication system, a base station in a future mobile communication system, an access node in a Wi-Fi system, or the like. The RAN node may be a macro base station (for example, 110a in FIG. 1), a micro base station or an indoor station (for example, 110b in FIG. 1), a relay node or a donor node, or a radio controller in a CRAN scenario.

Optionally, the RAN node may alternatively be a server, a wearable device, a vehicle, a vehicle-mounted device, or the like. For example, an access network device in a V2X technology may be an RS. All or part of functions of the RAN node in this application may alternatively be implemented by using a software function running on hardware, or may be implemented by using an instantiated virtualization function on a platform (for example, a cloud platform). The RAN node in this application may alternatively be a logical node, a logical module, or software that can implement all or part of functions of the RAN node.

In another possible scenario, a plurality of RAN nodes coordinate to assist the terminal device in implementing wireless access, and different RAN nodes respectively implement part of functions of a base station. For example, the RAN node may be a CU, a DU, a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different communication systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by a software module, a hardware module, or a combination of the software module and the hardware module.

It should be understood that quantities of devices in the foregoing communication system are merely used as examples, and are not limited thereto. During actual application, the communication system may further include more terminal devices and more RAN devices, and may further include another device.

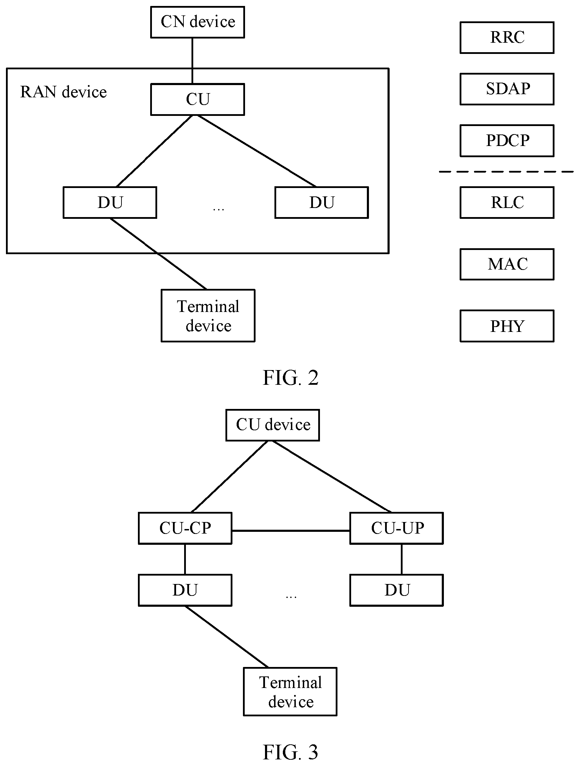

FIG. 2 is a diagram of a network architecture to which an embodiment of this application is applicable. As shown in FIG. 2, the network architecture includes a CN device, a RAN device, and a terminal device.

The RAN device includes a baseband apparatus and a radio frequency apparatus. The baseband apparatus may be implemented by one node, or may be implemented by a plurality of nodes. The radio frequency apparatus may be independently implemented by being disposed remotely from the baseband apparatus, or may be integrated into the baseband apparatus. Alternatively, part of functions of the radio frequency apparatus are independently integrated, and part of functions of the radio frequency apparatus are integrated into the baseband apparatus. For example, in an LTE communication system, the RAN device includes a baseband apparatus and a radio frequency apparatus. The radio frequency apparatus may be disposed remotely relative to the baseband apparatus. For example, an RRU is a remote radio unit disposed relative to a BBU.

Communication between the RAN device and the terminal device complies with a specific protocol layer structure. For example, a control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. A user plane protocol layer structure may include functions of protocol layers such as the PDCP layer, the RLC layer, the MAC layer, and the physical layer. In a possible implementation, a service data adaptation protocol (service data adaptation protocol, SDAP) layer may be further included above the PDCP layer.

The RAN device may implement the functions of the protocol layers such as the RRC layer, the PDCP layer, the RLC layer, and the MAC layer by using one node, or may implement the functions of these protocol layers by using a plurality of nodes. For example, in an evolved structure, the RAN device may include a CU and a DU, and a plurality of DUs may be centrally controlled by one CU. As shown in FIG. 2, for the CU and the DU, division may be performed based on a protocol layer of a radio network. For example, functions of the PDCP layer and a protocol layer above the PDCP layer are set on the CU, and functions of protocol layers below the PDCP layer, such as the RLC layer and the MAC layer, are set on the DU.

Division at the protocol layer is merely an example, and division may alternatively be performed at another protocol layer. For example, division is performed at the RLC layer. Functions of the RLC layer and protocol layers above the RLC layer are set on the CU, and functions of the protocol layers below the RLC layer are set on the DU. Alternatively, division is performed in a protocol layer. For example, part of functions of the RLC layer and functions of the protocol layers above the RLC layer are set on the CU, and a remaining function of the RLC layer and functions of the protocol layers below the RLC layer are set on the DU. In addition, division may alternatively be performed in another manner. For example, division is performed based on a delay. A function whose processing time needs to meet a delay requirement is set on the DU, and a function whose processing time does not need to meet the delay requirement is set on the CU.

In addition, the radio frequency apparatus may be independently integrated, and may not be disposed in the DU, or may be integrated into the DU, or part of the radio frequency apparatus is disposed remotely from the DU and a remaining part is integrated into the DU. This is not limited herein.

FIG. 3 is a diagram of another network architecture to which an embodiment of this application is applicable. Compared with those in the network architecture shown in FIG. 2, in FIG. 3, a CP and a UP of a CU may be further separated and implemented by different entities, which are respectively a CU-CP entity and a CU-UP entity.

In the foregoing network architecture, signaling generated by the CU may be sent to a terminal device through a DU, or signaling generated by the terminal device may be sent to the CU through the DU. The DU may transparently transmit the signaling to the terminal device or the CU by directly encapsulating the signaling at a protocol layer without parsing the signaling. In the following embodiments, if such signaling is transmitted between the DU and the terminal device, sending or receiving of the signaling by the DU includes this scenario. For example, signaling of an RRC layer or a PDCP layer is eventually processed as signaling of a PHY layer, to be sent to the terminal device, or is converted from received signaling of the PHY layer. In this architecture, it may also be considered that the signaling of the RRC layer or the PDCP layer is sent by the DU, or sent by the DU and a radio frequency apparatus.

The network architecture shown in FIG. 1, FIG. 2, or FIG. 3 is applicable to communication systems of various radio access technologies (radio access technologies, RATs), for example, may be an LTE communication system, or may be a 5G communication system, or may be a transition system between the LTE communication system and the 5G communication system. The transition system may also be referred to as a 4.5G communication system, or certainly may be a future communication system.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that, with evolution of the communication network architecture and emergence of a new service scenario, the technical solutions provided in embodiments of this application are also applicable to similar technical problems. For example, this application is applicable to a V2X scenario.

It should be understood that the network architectures shown in FIG. 1 to FIG. 3 are merely examples for description, and do not have any limitation function. Embodiments of this application are further applicable to another network architecture, where for example, a base station and a core network are not distinguished, that is, the base station and the core network may belong to a same network device. The network device communicates with a terminal device; or the terminal device communicates with another terminal device.

Terms in this application are first briefly described, to better understand embodiments of this application. These interpretations and descriptions are intended to facilitate understanding of embodiments of this application, but should not be construed as a limitation on the protection scope claimed in embodiments of this application.

### 1. XR

XR may refer to various real-and-virtual integrated environments and human-machine interactions enabled by computing technologies and wearable devices, and mainly includes virtual- and-real interaction technologies such as VR, AR, and MR. To improve experience of interaction between a person and a virtual world, an XR service has strict requirements on bandwidth and a delay. For example, XR may include cloud gaming.

For example, during downlink transmission, an encoder of a server generates data content at a fixed frequency (for example, 60 Hz or 120 Hz), and transmits the data content to a terminal through a core network and a RAN. For example, during uplink transmission, the terminal may capture an image of a current scene through a built-in camera and continuously upload the image of the current scene to the server at a specific frequency (for example, 60 Hz or 120 Hz).

For example, generally, the XR service periodically generates data at a specific frame rate. For example, a service model of an XR-type service in a downlink direction roughly includes AR/VR and cloud gaming. An AR/VR frame rate may be 60 frames per second (frame per second, FPS), to be specific, 60 frames of video images are generated per second, and one video frame appears approximately every 16.66 ms. The AR/VR frame rate may alternatively be 120 FPS, to be specific, 120 frames of video images are generated per second, and one video frame appears approximately every 8.33 ms. A cloud gaming frame rate may be 60 FPS or 120 FPS, to be specific, 60 frames of video images are generated per second or 120 frames of video images are generated per second.

### 2. NR protocol architecture

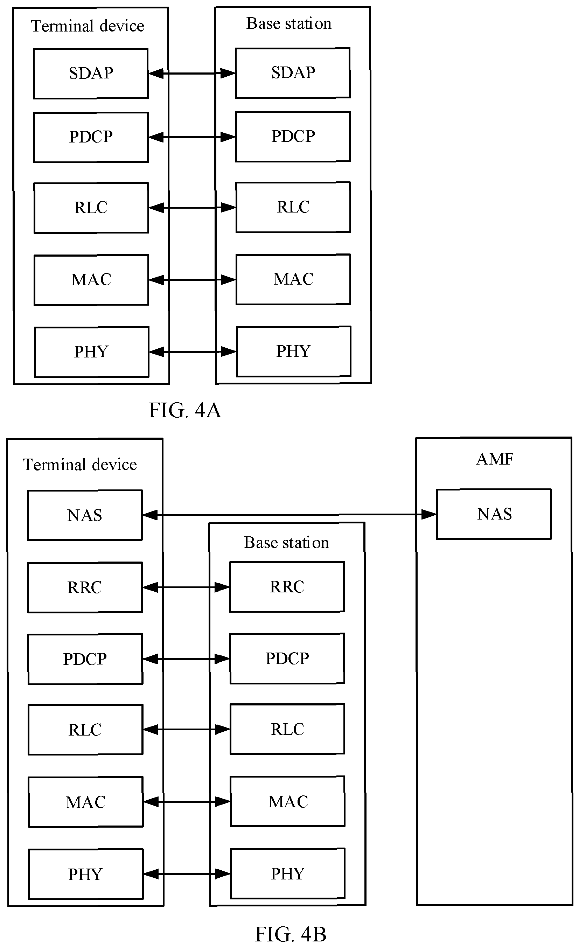

The NR protocol architecture in embodiments of this application may be divided into a user-plane protocol stack and a control-plane protocol stack. The following describes the foregoing two protocol stacks with reference to FIG. 4A and FIG. 4B.

FIG. 4A and FIG. 4B are diagrams of a protocol stack according to an embodiment of this application. In FIG. 4A and FIG. 4B, interaction between a terminal device and a base station is used as an example for description. FIG. 4A shows the user-plane protocol stack, and FIG. 4B shows the control-plane protocol stack.

The user-plane protocol stack is a protocol cluster used for user data transmission. As shown in FIG. 4A, the user-plane protocol stack may include five layers: a PHY layer, a MAC layer, an RLC layer, a PDCP layer, and an SDAP layer.

An architecture of the control-plane protocol stack is a protocol cluster used for control signaling transmission of a system. As shown in FIG. 4B, the control-plane protocol stack may include a non-access stratum (non-access stratum, NAS), an RRC layer, a PDCP layer, an RLC layer, a MAC layer, and a PHY layer.

For example, the PHY layer may be responsible for one or more of encoding and decoding, modulation and demodulation, multi-antenna mapping, and another physical layer function. For example, the MAC layer may be responsible for one or more of a hybrid automatic repeat request (hybrid automatic repeat request, HARQ), uplink scheduling, downlink scheduling, and the like. For example, the RLC layer may be responsible for one or more of segmentation, reassembly, retransmission processing, and the like. For example, the PDCP layer may be responsible for one or more of header compression/decompression, security (an encryption function and an integrity protection function), retransmission, in-order delivery, and the like. For example, the RRC layer may be responsible for one or more of functions such as broadcast, paging, RRC connection management, radio bearer control, mobility management, and terminal device measurement reporting and control. For example, the NAS layer may be responsible for one or more of functions such as identity verification, mobility management, and security control.

For the user-plane protocol stack, compared with an LTE protocol stack, the NR protocol stack has an additional SDAP layer. For the control-plane protocol stack, the NR protocol stack is similar to the LTE protocol stack.

Optionally, in this embodiment of this application, each layer in the protocol stack may be replaced with an entity. For example, the PDCP layer may be replaced with a PDCP entity, and the SDAP layer may be replaced with an SDAP entity. Unified descriptions are provided herein. Details are not described below again.

### 3. Configured grant (configured grant, CG)

For example, an uplink resource may include a dynamic grant (dynamic grant, DG) and the CG.

For example, the DG is a resource dynamically scheduled by an access network device for a terminal device by using downlink control information (downlink control information, DCI). In an uplink, the access network device may dynamically allocate the resource to the terminal device on a physical downlink control channel (physical downlink control channel, PDCCH) (for example, by using a cell radio network temporary identifier (cell radio network temporary identifier, C-RNTI) or a configured scheduling network temporary identifier (configured scheduling network temporary identifier, CS-RNTI)).

For example, the CG is a resource configured by the access network device for the terminal device. The CG may include a type 1 CG and a type 2 CG.

For example, for the type 1 CG, the access network device may provide a configured uplink grant (for example, the uplink grant may be a periodic resource) for the terminal device by using RRC signaling.

For example, for the type 2 CG, the access network device may configure a periodicity of an uplink grant for the terminal device by using RRC signaling, and then activate or deactivate the configured uplink grant by using a PDCCH scrambled by using a CS-RNTI.

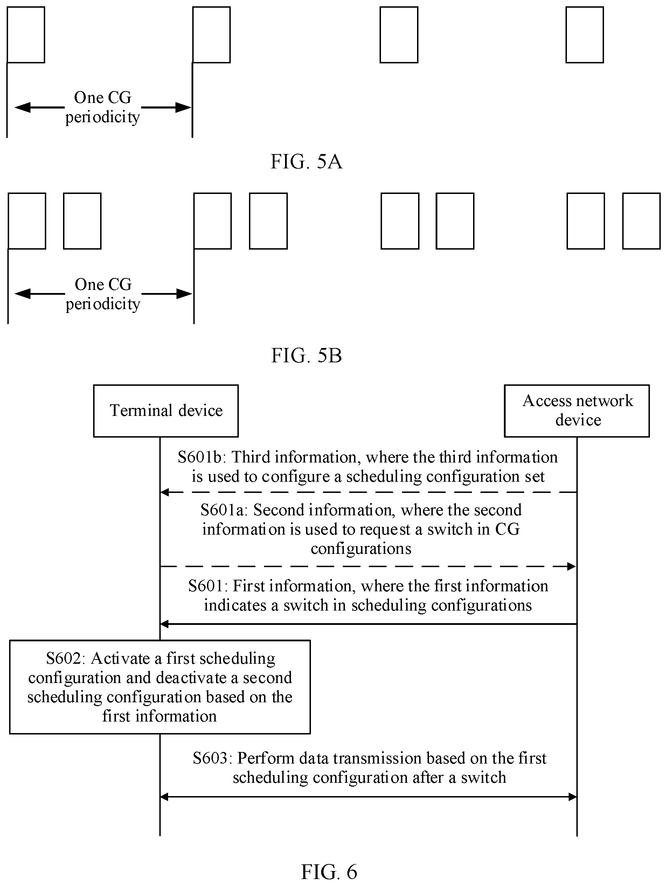

Optionally, the CG resource is periodic, and is appropriate for a periodic service. In this way, the access network device does not need to schedule an uplink resource for the terminal device by using DCI each time. For descriptions of the CG, refer to FIG. 5A and FIG. 5B.

FIG. 5A and FIG. 5B are diagrams of a CG according to an embodiment of this application. For example, one CG may be shown in FIG. 5A, and one CG periodicity includes one CG occasion. For example, one block is one CG occasion. For example, one CG may be shown in FIG. 5B, and one CG periodicity includes a plurality of CG occasions.

### 4. Downlink (downlink, DL) semi-persistent scheduling (semi-persistent scheduling, SPS)

DL SPS means that one piece of DCI can indicate several physical downlink shared channels (physical downlink shared channels, PDSCHs). When a terminal device receives a specific DCI message, the terminal device may start to periodically receive the PDSCHs until such persistent scheduling stops.

With reference to the accompanying drawings, the following describes a communication method in embodiments of this application.

For ease of understanding and description, the following describes the communication method in embodiments of this application by using interaction between a terminal device and an access network device as an example. However, this shall not constitute any limitation on an execution body of the communication method in embodiments of this application. For example, a method performed by the terminal device may alternatively be performed by a module (for example, a circuit, a chip, or a chip system) of the terminal device, or may be implemented by a logical node, a logical module, or software that can implement all or part of functions of the terminal device. A method performed by the access network device may alternatively be performed by a module (for example, a circuit, a chip, or a chip system) of the access network device, or may be implemented by a logical node, a logical module, or software that can implement all or part of functions of the access network device.

FIG. 6 is a schematic interaction flowchart of a data transmission method according to an embodiment of this application. As shown in FIG. 6, the method includes the following steps.

S601: An access network device sends first information to a terminal device, where the first information indicates a switch in scheduling configurations.

Correspondingly, the terminal device receives the first information from the access network device.

For example, the scheduling configuration may be used to confirm or schedule a resource (which may be at least one of a periodic resource and an aperiodic resource), for example, to confirm or schedule an uplink resource, or confirm or schedule a downlink resource.

Optionally, the resource may be used to transmit a periodic service, for example, an XR service.

Optionally, when the resource is a periodic resource, the resource may be a CG resource or an SPS resource, but another type of resource is not excluded.

For example, when the resource is a CG resource, the scheduling configuration may be a CG configuration. For a parameter setting of the CG configuration, refer to descriptions of a CG in an existing standard. Details are not described again. In this way, the terminal device can complete a switch in CG configurations with low signaling overhead.

For example, when the resource is an SPS resource, the scheduling configuration may be an SPS configuration. For a parameter setting of the SPS configuration, refer to descriptions of SPS in an existing standard. Details are not described again. In this way, the terminal device can complete a switch in SPS configurations with low signaling overhead.

For example, when the resource is a CG resource, the scheduling configuration may be a CG resource. One CG resource may include one or more CG occasions.

For example, when the resource is an SPS resource, the scheduling configuration may be an SPS resource.

For example, when the resource is a CG resource, the scheduling configuration may be a CG resource configuration.

For example, when the resource is an SPS resource, the scheduling configuration may be an SPS resource configuration.

For example, the "a switch in scheduling configurations" may be understood as a switch between different scheduling configurations. For example, the first information may indicate a switch between a first scheduling configuration (including or indicating one or more scheduling configurations) and a second scheduling configuration (including or indicating one or more scheduling configurations). For example, the first information indicates to switch from the second scheduling configuration to the first scheduling configuration.

It should be noted that, when the first scheduling configuration includes one or more scheduling configurations, and/or the second scheduling configuration includes one or more scheduling configurations, the terminal device may complete a switch from one scheduling configuration to another scheduling configuration, from one scheduling configuration to a plurality of scheduling configurations, or from a plurality of scheduling configurations to another scheduling configuration, allowing for greater flexibility in adapting to various changes in service characteristics.

For example, the "a switch in scheduling configurations" may be further understood as follows: The second scheduling configuration is in an active state before a scheduling configuration switch, and the second scheduling configuration is in an inactive state after the scheduling configuration switch. A scheduling configuration in the active state may be used for data transmission between the access network device and the terminal device.

For example, the "indicating a switch in scheduling configurations" may be further understood as follows: The first information indicates to activate the first scheduling configuration; or the first information indicates to activate the first scheduling configuration and deactivate the second scheduling configuration.

If the first information indicates to activate the first scheduling configuration, the second scheduling configuration may be in the inactive state (the second scheduling configuration is implicitly deactivated) once the first scheduling configuration is activated. If the first information indicates to activate the first scheduling configuration and deactivate the second scheduling configuration, the first scheduling configuration is in the active state and the second scheduling configuration may be in the inactive state (the second scheduling configuration is explicitly deactivated).

For example, the second scheduling configuration is a scheduling configuration in the active state, and the first information indicates to activate the first scheduling configuration. Once the first scheduling configuration is activated, the second scheduling configuration may be in the inactive state. In other words, the second scheduling configuration needs to be deactivated, thereby completing a switch between the first scheduling configuration and the second scheduling configuration.

In a possible implementation, the first scheduling configuration and the second scheduling configuration belong to a same scheduling configuration set, enabling the terminal device to complete a switch between different scheduling configurations in the scheduling configuration set.

In a possible implementation, the first scheduling configuration and the second scheduling configuration belong to different scheduling configuration sets. In this way, the access network device can indicate a switch between different scheduling configurations in different scheduling configuration sets by using the first information.

For a switch in the scheduling configurations, refer to Table 1. Content shown in Table 1 is merely used as an example for understanding, and is not used as a final limitation.

**Table 1**

| Activated scheduling configuration | To-be-activated scheduling configuration |
|---|---|
| Scheduling configuration a1 | Scheduling configuration a2 |
| Scheduling configuration b1 | Scheduling configuration b2 |
| Scheduling configuration c1 | Scheduling configuration c2 |

As shown in Table 1, for example, the scheduling configuration a1 is an activated scheduling configuration (which may be the second scheduling configuration), the scheduling configuration a2 is a to-be-activated scheduling configuration (which may be the first scheduling configuration), and the first information may indicate a switch between the scheduling configuration a1 and the scheduling configuration a2; the scheduling configuration b1 is an activated scheduling configuration (which may be the second scheduling configuration), the scheduling configuration b2 is a to-be-activated scheduling configuration (which may be the first scheduling configuration), and the first information may indicate a switch between the scheduling configuration b1 and the scheduling configuration b2; or the scheduling configuration c1 is an activated scheduling configuration (which may be the second scheduling configuration), the scheduling configuration c2 is a to-be-activated scheduling configuration (which may be the first scheduling configuration), and the first information may indicate a switch between the scheduling configuration c1 and the scheduling configuration c2. The scheduling configuration a1/a2, b1/b2, c1/c2, or the like may indicate that the latter includes one or more scheduling configurations.

In a possible implementation, when the first information indicates a switch in the scheduling configurations, the first information may carry identification information of a to-be-activated scheduling configuration. For example, the first information includes an identifier or an index of the to-be-activated scheduling configuration (which may be configured by the access network device or predefined in a protocol, where this is not limited). In this way, a switch in the scheduling configurations can be indicated.

For example, with reference to Table 1, the first information indicates to activate the scheduling configuration a2, the first information carries identification information of the scheduling configuration a2, and the scheduling configuration a1 may be implicitly indicated to be in the inactive state; the first information indicates to activate the scheduling configuration b2, the first information carries identification information of the scheduling configuration b2, and the scheduling configuration b1 may be implicitly indicated to be in the inactive state; or the first information indicates to activate the scheduling configuration c2, the first information carries identification information of the scheduling configuration c2, and the scheduling configuration c1 may be implicitly indicated to be in the inactive state.

In another possible implementation, when the first information indicates a switch in the scheduling configurations, the first information may carry a bitmap. A value of a bit location corresponding to the to-be-activated scheduling configuration in the bitmap is different from a value of a bit location corresponding to an activated scheduling configuration. For example, a bit being 1 may indicate activation, and a bit being 0 may indicate deactivation. In this way, a switch in the scheduling configurations can be indicated.

For example, with reference to Table 1, the first information indicates to activate the scheduling configuration a2, the first information carries the bitmap, a value of a bit location corresponding to the scheduling configuration a2 is 1, a value of a bit location corresponding to the scheduling configuration a1 is 0, and the scheduling configuration a1 may be explicitly indicated to be in the inactive state; the first information indicates to activate the scheduling configuration b2, the first information carries the bitmap, a value of a bit location corresponding to the scheduling configuration b2 is 1, a value of a bit location corresponding to the scheduling configuration b1 is 0, and the scheduling configuration b1 may be explicitly indicated to be in the inactive state; or the first information indicates to activate the scheduling configuration c2, the first information carries the bitmap, a value of a bit location corresponding to the scheduling configuration c2 is 1, a value of a bit location corresponding to the scheduling configuration c1 is 0, and the scheduling configuration c1 may be explicitly indicated to be in the inactive state.

S602: The terminal device activates the first scheduling configuration and deactivates the second scheduling configuration based on the first information.

It may be understood that the "deactivating the second scheduling configuration" may be understood as follows: A scheduling configuration used by the terminal device before the first scheduling configuration is activated is the second scheduling configuration.

For example, before receiving the first information, the terminal device performs confirmation by using the second scheduling configuration, to implement data transmission with the access network device. After receiving the first information, the terminal device activates the first scheduling configuration and deactivates the second scheduling configuration based on the first information, and performs confirmation by using the first scheduling configuration, to implement data transmission with the access network device.

In a possible implementation, based on the first information, the terminal device may activate one scheduling configuration (the to-be-activated scheduling configuration may be determined by the terminal device, and this is not limited) (for example, the first scheduling configuration) and deactivate a scheduling configuration (for example, the second scheduling configuration) that is previously in the active state. For example, the access network device configures a plurality of scheduling configurations (which may belong to a same scheduling configuration set or may respectively belong to different scheduling configuration sets, where this is not limited) for the terminal device, and based on the indication of the first information, the terminal device activates one scheduling configuration and deactivates the scheduling configuration that is previously in the active state. For another example, based on a data transmission requirement of the terminal device, the terminal device determines a to-be-activated scheduling configuration and deactivates the scheduling configuration that is previously in the active state. This is not limited.

In another possible implementation, the terminal device may activate a specified scheduling configuration based on the first information. For example, the first information may carry identification information of the to-be-activated scheduling configuration. The terminal device may activate the corresponding scheduling configuration based on the identification information of the to-be-activated scheduling configuration, and deactivate the scheduling configuration that is previously in the active state. This is not limited.

S603: The terminal device performs data transmission with the access network device based on the first scheduling configuration after a switch.

For example, if the scheduling configuration is a CG configuration, the terminal device may confirm an uplink resource based on the first scheduling configuration (for example, a first CG configuration) after a switch, and send uplink service data to the access network device based on the first scheduling configuration; or if the scheduling configuration is an SPS configuration, the terminal device may confirm a downlink resource based on the first scheduling configuration (for example, a first SPS configuration) after a switch, and receive downlink service data from the access network device based on the first scheduling configuration. For another example, if the scheduling configuration is an SPS configuration, the terminal device may confirm an uplink resource based on the first scheduling configuration (for example, a first SPS configuration) after a switch, and send uplink service data to the access network device based on the first scheduling configuration.

In conclusion, by using the first information, the terminal device may complete a switch from the second scheduling configuration to the first scheduling configuration, or complete activation of the first scheduling configuration and deactivation of the second scheduling configuration. In this way, the terminal device can complete a switch in the scheduling configurations with low signaling overhead.

In addition, the access network device may indicate, by using the first information, the terminal device to switch the scheduling configurations. Unlike existing methods that rely on two separate messages to coordinate the switch, this solution effectively reduces signaling overhead associated with switching scheduling configurations.

Optionally, the method 600 may further include the following step.

S601a: The terminal device sends second information to the access network device, where the second information is used to request a switch in CG configurations.

Correspondingly, the access network device receives the second information.

For example, the terminal device may determine, based on the data transmission requirement of the terminal device, whether a currently activated scheduling configuration can meet the data transmission requirement. When determining that the currently activated scheduling configuration cannot meet the data transmission requirement, the terminal device may send, to the access network device, the second information used to request a switch in the CG configurations, and the access network device may send the first information to the terminal device based on the second information. This enables the terminal device and the access network device to complete signaling exchange on whether to switch the scheduling configurations.

Optionally, the second information may include identification information of the to-be-activated scheduling configuration. In this way, the access network device can determine the scheduling configuration specifically required by the terminal device, and can indicate the terminal device to activate the scheduling configuration that the terminal device wants to activate.

Optionally, the second information may include information about one or more CG configurations recommended by the terminal device, for example, periodicity information. Correspondingly, the access network device may determine a to-be-activated CG configuration based on the information about the one or more CG configurations recommended by the terminal device.

Optionally, the second information may alternatively not include the identification information of the to-be-activated scheduling configuration. Further, the access network device may determine the to-be-activated scheduling configuration based on a change of a service periodicity of data transmission between the access network device and the terminal device. For example, the service periodicity of data transmission between the access network device and the terminal device is switched from a first service periodicity to a second service periodicity, the terminal device confirms a resource by using the second scheduling configuration, and cannot match the second service periodicity, and the access network device may indicate to switch the scheduling configurations, for example, from the second scheduling configuration to the first scheduling configuration, where the first scheduling configuration can match the second service periodicity. In this way, data transmission between the terminal device and the access network device can match the scheduling configuration.

In addition, the service periodicity may be understood as a parameter like a frame rate or a transmission rate of service transmission. Different scheduling configurations may respectively match different frame rates or transmission rates of service transmission, or the like.

Optionally, the method 600 may further include the following step.

S601b: The access network device sends third information to the terminal device, where the third information is used to configure the scheduling configuration set.

Correspondingly, the terminal device receives the third information.

In this way, the scheduling configuration set is configured for the terminal device, so that the terminal device can complete a switch between different scheduling configurations in the same scheduling configuration set based on the first information.

In the foregoing solution, the access network device may configure one or more CG configuration sets, each CG configuration set includes one or more CG configurations, and part of parameters of the CG configuration in the CG configuration set may be preconfigured. For example, for a type 2 CG, an RRC parameter (which may include parameters such as a CS-RNTI, a periodicity, and a quantity of HARQ processes) is preconfigured, but is not activated by using DCI. Correspondingly, the first information may be DCI, and the DCI may be configured based on existing activation DCI (for example, a CG configuration index of the first CG configuration is filled in a HARQ ID field). A type 1 CG may be activated through RRC. Correspondingly, the first information may be RRC, and the RRC may be configured based on existing RRC used to activate the CG configuration.

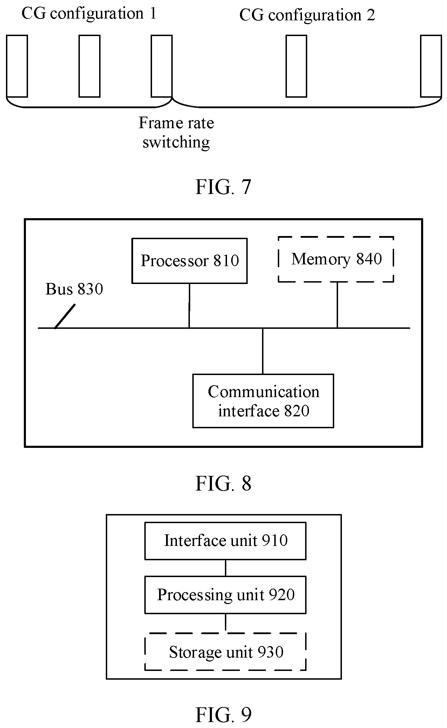

With reference to FIG. 7, the following further describes the solution in FIG. 6.

FIG. 7 is a diagram of a switch in CG configurations according to an embodiment of this application. As shown in FIG. 7, the terminal device transmits an uplink service based on a CG configuration 1. The uplink service may be a periodic service, for example, an uplink XR service, and a frame rate of the uplink service is 30 FPS. When the frame rate of the uplink service is switched from 30 FPS to 90 FPS, the CG configuration 1 cannot match transmission of the uplink service whose frame rate is 90 FPS. The access network device may send the first information to the terminal device. The first information may indicate to switch from the CG configuration 1 to a CG configuration 2, and the CG configuration 2 can match transmission of the uplink service whose frame rate is 90 FPS.

It should be noted that the CG configuration 1 and the CG configuration 2 may be configured by the access network device, and sent to the terminal device. In this way, the terminal device can complete a switch between the CG configuration 1 and the CG configuration 2 based on the first information.

Finally, apparatus embodiments in embodiments of this application are described.

To implement various functions in the method provided in this application, the terminal device and the access network device each may include a hardware structure and/or a software module, to implement the various functions in a form of the hardware structure, the software module, or a combination of the hardware structure and the software module. Whether a function in the various functions is performed in the form of the hardware structure, the software module, or the combination of the hardware structure and the software module depends on particular applications and design constraints of the technical solutions.

FIG. 8 is a block diagram of a communication apparatus according to an embodiment of this application. The communication apparatus includes a processor 810 and a communication interface 820. The processor 810 and the communication interface 820 may be connected to each other through a bus 830. The communication apparatus may be a terminal device, or may be an access network device.

Optionally, the communication apparatus may further include a memory 840. The memory 840 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory 840 is configured to store related instructions and data.

The processor 810 may be one or more central processing units (central processing units, CPUs). When the processor 810 is one CPU, the CPU may be a single-core CPU, or may be a multi-core CPU.

When the communication apparatus is a terminal device, for example, the processor 810 is configured to perform the following operations: receiving first information; and activating a first scheduling configuration and deactivating a second scheduling configuration based on the first information.

When the communication apparatus is an access network device, for example, the processor 810 is configured to perform the following operations: sending first information; and performing data transmission based on a first scheduling configuration after a switch.

The foregoing content is merely used as an example for description. The communication apparatus is the terminal device or the access network device, and is responsible for performing the method or the steps related to the terminal device or the access network device in the foregoing method embodiments.

The foregoing descriptions are merely example descriptions. For specific content, refer to the content shown in the foregoing method embodiments.

It should be noted that, for implementations of the operations in FIG. 8, refer to corresponding descriptions in the method embodiments shown in FIG. 6.

FIG. 9 is a block diagram of another communication apparatus according to an embodiment of this application. The communication apparatus may be a terminal device or an access network device, or may be a chip or a module in the terminal device or the access network device, and is configured to implement the method in the foregoing embodiments.

The communication apparatus includes an interface unit 910 and a processing unit 920. The interface unit 910 may include a sending unit and a receiving unit. The sending unit is configured to perform a sending action of the communication apparatus, and the receiving unit is configured to perform a receiving action of the communication apparatus. For ease of description, in this embodiment of this application, the sending unit and the receiving unit are combined into one transceiver unit. Unified descriptions are provided herein. Details are not described below again.

When the communication apparatus is a terminal device, for example, the interface unit 910 is configured to receive first information. The processing unit 920 is configured to perform content of steps such as processing and coordination related to the terminal device. For example, the processing unit 920 is configured to: activate a first scheduling configuration and deactivate a second scheduling configuration based on the first information.

When the communication apparatus is an access network device, for example, the interface unit 910 is configured to send first information. The processing unit 920 is configured to perform content of steps such as processing and coordination related to the access network device. For example, the processing unit 920 is configured to perform data transmission based on a first scheduling configuration after a switch.

The foregoing content is merely used as an example for description. The communication apparatus is the terminal device or the access network device, and is responsible for performing the method or the steps related to the terminal device or the access network device in the foregoing method embodiments.

Optionally, the communication apparatus further includes a storage unit 930. The storage unit 930 is configured to store a program or code used to perform the foregoing method.

It should be noted that the apparatus embodiment shown in FIG. 9 is used to implement the content described in FIG. 6. For specific execution steps and a method of the apparatuses shown in FIG. 9, refer to the content described in the foregoing method embodiments.

It should be noted that the apparatuses described in FIG. 8 and FIG. 9 may alternatively be chips, chip systems, or the like. This is not limited. When the apparatuses shown in FIG. 8 and FIG. 9 are chips or chip systems, the apparatuses can be configured to implement functions of the terminal device or the access network device.

This application further provides a chip, including a processor, configured to: invoke, from a memory, instructions stored in the memory and run the instructions, to enable a communication device in which the chip is installed to perform the method in the foregoing examples.

This application further provides another chip, including an input interface, an output interface, and a processor. The input interface, the output interface, and the processor are connected to each other through an internal connection path. The processor is configured to execute code in a memory. When the code is executed, the processor is configured to perform the method in the foregoing examples. Optionally, the chip further includes the memory. The memory is configured to store a computer program or code.

This application further provides a processor, configured to be coupled to a memory, and configured to perform a method and functions that are related to the network device or the terminal device in any one of the foregoing embodiments.

Another embodiment of this application provides a computer program product including instructions. When the computer program product runs on a computer, the method in the foregoing embodiments is implemented.

This application further provides a computer program. When the computer program is run on a computer, the method in the foregoing embodiments is implemented.

Another embodiment of this application provides a computer-readable storage medium. The computer-readable storage medium stores a computer program. When the computer program is executed by a computer, the method in the foregoing embodiments is implemented.

A person of ordinary skill in the art may be aware that units and algorithm steps in the examples described with reference to embodiments disclosed in this specification can be implemented by electronic hardware or a combination of computer software and the electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for convenience and brevity of description, for a detailed working process of the foregoing system, apparatus, and unit, refer to a corresponding process in the foregoing method embodiments. Details are not described herein again.

In the several embodiments provided in this application, the disclosed system, apparatus, and method may be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one place, or may be distributed on a plurality of network units. A part or all of the units may be selected based on actual requirements, to achieve the objectives of the solutions of embodiments.

In addition, functional units in embodiments of this application may be integrated into one processing unit, or each of the units may exist alone physically, or two or more units are integrated into one unit.

When being implemented in a form of a software functional unit and sold or used as an independent product, the foregoing functions may be stored in a computer-readable storage medium. Based on such an understanding, the technical solutions in embodiments of this application essentially, or the part contributing to the conventional technology, or part of the technical solutions may be implemented in a form of a software product. The computer software product is stored in a storage medium, and includes several instructions for indicating a computing device (which may be a personal computer, a server, or a network device) to perform all or part of the steps of the method described in embodiments of this application. The foregoing storage medium includes any medium that can store program code, for example, a USB flash drive, a removable hard disk, a ROM, a RAM, a magnetic disk, or an optical disc.

The foregoing descriptions are merely specific implementations of embodiments of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A data transmission method, comprising:
receiving first information, wherein the first information indicates a switch in scheduling configurations; and
activating a first scheduling configuration and deactivating a second scheduling configuration based on the first information.

2. The method according to claim 1, wherein the first scheduling configuration is a first configured grant CG configuration, and the second scheduling configuration is a second CG configuration.

3. The method according to claim 2, wherein the method further comprises:
sending second information, wherein the second information is used to request a switch in CG configurations.

4. The method according to claim 1, wherein the first scheduling configuration is a first semi-persistent scheduling SPS configuration, and the second scheduling configuration is a second SPS configuration.

5. The method according to any one of claims 1 to 4, wherein the first scheduling configuration and the second scheduling configuration belong to a scheduling configuration set.

6. The method according to claim 5, wherein the method further comprises:
receiving third information, wherein the third information is used to configure the scheduling configuration set.

7. The method according to any one of claims 1 to 6, wherein
the first scheduling configuration comprises one or more scheduling configurations, and/or the second scheduling configuration comprises one or more scheduling configurations.

8. A data transmission method, comprising:
sending first information, wherein the first information indicates a switch in scheduling configurations; and
performing data transmission based on a first scheduling configuration after a switch.

9. The method according to claim 8, wherein the first scheduling configuration is a first configured grant CG configuration.

10. The method according to claim 9, wherein the method further comprises:
receiving second information, wherein the second information is used to request a switch in CG configurations.

11. The method according to claim 8, wherein the first scheduling configuration is a first semi-persistent scheduling SPS configuration.

12. The method according to any one of claims 8 to 11, wherein the first scheduling configuration belongs to a scheduling configuration set.

13. The method according to claim 12, wherein the method further comprises:
sending third information, wherein the third information is used to configure the scheduling configuration set.

14. The method according to any one of claims 8 to 13, wherein the first scheduling configuration comprises one or more scheduling configurations.

15. A communication apparatus, comprising:
an interface unit, configured to receive first information, wherein the first information indicates a switch in scheduling configurations; and
a processing unit, configured to: activate a first scheduling configuration and deactivate a second scheduling configuration based on the first information.

16. The communication apparatus according to claim 15, wherein the first scheduling configuration is a first configured grant CG configuration, and the second scheduling configuration is a second CG configuration.

17. The communication apparatus according to claim 16, wherein
the interface unit is further configured to send second information, wherein the second information is used to request a switch in CG configurations.

18. The communication apparatus according to claim 15, wherein the first scheduling configuration is a first semi-persistent scheduling SPS configuration, and the second scheduling configuration is a second SPS configuration.

19. The communication apparatus according to any one of claims 15 to 18, wherein the first scheduling configuration and the second scheduling configuration belong to a scheduling configuration set.

20. The communication apparatus according to claim 19, wherein
the transceiver unit is further configured to receive third information, wherein the third information is used to configure the scheduling configuration set.

21. The communication apparatus according to any one of claims 15 to 20, wherein
the first scheduling configuration comprises one or more scheduling configurations, and/or
the second scheduling configuration comprises one or more scheduling configurations.

22. A communication apparatus, comprising:
an interface unit, configured to send first information, wherein the first information indicates a switch in scheduling configurations; and
a processing unit, configured to perform data transmission based on a first scheduling configuration after a switch.

23. The communication apparatus according to claim 22, wherein the first scheduling configuration is a first configured grant CG configuration.

24. The communication apparatus according to claim 23, wherein
the interface unit is further configured to receive second information, wherein the second information is used to request a switch in CG configurations.

25. The communication apparatus according to claim 22, wherein the first scheduling configuration is a first semi-persistent scheduling SPS configuration.

26. The communication apparatus according to any one of claims 22 to 25, wherein the first scheduling configuration belongs to a scheduling configuration set.

27. The communication apparatus according to claim 26, wherein
the interface unit is further configured to send third information, wherein the third information is used to configure the scheduling configuration set.

28. The communication apparatus according to any one of claims 22 to 27, wherein the first scheduling configuration comprises one or more scheduling configurations.

29. A computer-readable storage medium, wherein the computer-readable storage medium stores a computer program or instructions, and when the computer program or the instructions are run on a computer,
the method according to any one of claims 1 to 7 is performed, or
the method according to any one of claims 8 to 14 is performed.

30. A computer program product, comprising instructions, wherein when the instructions are run on a computer,
the method according to any one of claims 1 to 7 is performed, or
the method according to any one of claims 8 to 14 is performed.

31. A communication apparatus, comprising a module configured to perform the method according to any one of claims 1 to 7.

32. A communication apparatus, comprising a module configured to perform the method according to any one of claims 8 to 14.

33. A communication apparatus, comprising a processor, wherein the processor is configured to execute instructions, to enable the apparatus to perform the method according to any one of claims 1 to 7.

34. A communication apparatus, comprising a processor, wherein the processor is configured to execute instructions, to enable the apparatus to perform the method according to any one of claims 8 to 14.
